# EUROPEAN PATENT APPLICATION

(11) **EP 0 961 490 A2**
(43) Date of publication of application: **01.12.1999**
(21) Application number: 99303643.3
(22) Date of filing: 11.05.1999
(51) Int. Cl.: H04N 5/00

(54) **Internet convolution audio/video server**

(30) Priority: 28.05.1998 US 86157
(71) Applicant: International Business Machines Corporation, Armonk, NY 10504 (US)
(72) Inventor: Chang, Shu-Ping, Shrub Oak, NY 10588 (US); Lean, Andy Geng-Chyun c/o IBM United Kingdom Ltd, Winchester Hampshire SO21 2JN (GB); Schaffa, Frank Andre, Hartsdale, NY 10530 (US); Seidman, David Israel, New York, NY 10023 (US)
(74) Representative: Boyce, Conor

(57) **Abstract**

This invention describes a system for video and audio distribution over the Internet. The Internet Convolution Audio/video Server (ICAVS) acts as a proxy Internet server for clients performing world wide web searches for video and audio. It delivers video and audio information in a format customized according to the client's system and communication constraints, and performs web crawling, video caching, and format conversion (when necessary). The proxy serving function reduces the requirements on the client's system for accessing video or audio in a variety of formats, in addition to reducing server storage requirements and Internet bandwidth.

## Description

This invention relates to a system for delivering audio and video over a communications network.

There is an increasingly large volume of video information available on the world wide web (WWW). while this presents an excellent opportunity for the dissemination of video for many applications (such as remote learning), several problems prevent widespread access to this resource
- In order to view these video segments, a client's system must have a large storage capacity and high-bandwidth access to the server, via the public Internet.
- Except in the office environment, most clients (using personal computers at home) have limited system resources - particularly system memory (RAM), disk storage space, processor speed, and communications bandwidth (limited by a 28.8 Kbps modem, or a 56 Kbps modem for the advanced user.)
- In viewing video which is available on the Internet, the client has the option of downloading the video file to his local storage prior to viewing, or viewing the video as it is "streamed" over the Internet. Video downloading has the disadvantage of being prohibitively slow. For example, a four-minute MPEG-2 video clip with a bit rate of 4 Mbps (occupying 30 MBytes) requires over two hours to download, using a 28.8 Kbps modem. An additional disadvantage of video downloading is the problems it introduces relating to the unauthorized distribution of copyrighted material.
- The video streaming technology used today will not solve the problem of bandwidth limitation. MPEG1 streams, for example, call for a bandwidth of 1.5 Mbps or higher, and this bandwidth can't be supplied consistently over the Internet, with today's technology. These bandwidth limitations result in small video displays of poor quality.

The present invention (the Internet Convolution Audio/Video Server, ICAVS) is a proxy server to be connected to existing Internet (or intranet) networks for the distribution, to network clients, of video and audio material. This proxy server, as described below, has features which facilitate access to video over the Internet, even in the face of the difficulties described above, and customize the video delivery based on the capabilities of the client's system.

The concept of a proxy server is known in the art, as is the concept of delivering content which is customized for the client. Proxies such as [1] have been designed for improving Web access by clients through the use of compression and filtering techniques, as well as compression. US Patent 5,678,041 describes a proxy server which performs the function of controlling access to objectionable material, including video.

Examples of customization of video and other content are described in IBM US patent applications SN 08/854,227 and SN 08/854,225, corresponding to Japanese Application No. 10/118,397, both applications filed on May 9, 1997 to P. Capek in which customized program material is sent to the user. For example, the (video) commercials seen by the viewer of a video program are customized based on a profile describing the viewer's interests. In contrast, the current invention customizes the format and bandwidth of the video which is sent to the user, on the basis of the user's system's capabilities and the state of the network.

Another IBM US patent application disclosing the teaching of storing video information is US Patent No. 5,758,085 filed on August 23, 1994, entitled, "A Semiconductor Base Server Providing Multimedia Information on Demand Over wide Area Networks". The latter application teaches the storing of processed video packets in a special memory means for subsequent transmission through requesting clients.

US Patent 5,673,205 describes a video data server which monitors the client's capabilities, and sends still frames in the place of video if and when this is necessary. US Patent 5,668,948 describes a video server which delivers pre-stored content (i.e., no Web crawling is involved) and converts only from digital format to analog (i.e., NTSC or PAL formats.) US Patent 5,657,461 describes a user interface to a server (not a proxy) which does not involve format conversion.

There is therefore a need for an audio and video distribution system which provides automatic on-line video format and bit rate customization in response to client and network capabilities, for storing audio and video data in multiple formats, for determining client and network capabilities during a session with the client and finally for transmitting decoding capabilities to a requesting client during a communications session.

Reference [2] describes a video data server which monitors the client's capabilities, and sends still frames in the place of video if and when this is necessary. US Patent 5,668,948 describes a video server which delivers pre-stored content (i.e. no Web crawling is involved) and converts only from digital format to analog (i.e. NTSC or PAL formats.) US Patent 5,657,461 describes a user interface to a server (not a proxy) which does not involve format conversion.

The Internet Convolution Audio/Video Server (ICAVS) enables clients (using any Web browser) to access video or audio material from a variety of servers in a wide variety of video encoding formats and bit rates. The video or audio format and bit rate which is appropriate for the individual client is determined and supplied. The ICAVS can customize a video or audio's bit rate for a specific user or group of users (if necessary) with a fine granularity (e.g. an AVI format video at a bit rate of 14.2 kbps.)

The ICAVS uses Web crawler technology to collect Web information (Web pages and their associated data, audio, and video files) and caches it locally for fast response - rather than accessing content from various Web sites, the user gains access to the content of many Web sites by accessing ICAVS. Video resources are stored in ICAVS in two formats: in the original format (as it was downloaded from the original server(s)) and a "most common format" (MCF) copy. Note that there may be many original copies of the same video in the ICAVS, since a video may be available with different URL's and in different formats. The MCF copy will frequently be a low-bit rate copy, for reduced-bandwidth distribution. The low-bit rate copy is generated by the ICAVS system, using a video format conversion facility. For example, if a 28.8 Kbps modem connection is most commonly used to access the ICAVS, a video file may be stored in its original form and as a 20 Kbps low-bit rate video copy.

When a client session is being established, the server determines the client system's characteristics by downloading to the client a software module which returns its capabilities. If necessary, a set of software can be downloaded to the user's system which includes the necessary drivers and other programs for viewing the video in a given format.

The characteristics of the server-to-client network are also ascertained during session set-up, and may be monitored throughout the video's transmission. An algorithm manages how characteristics are maintained and updated. This information is then stored in a Client Information Database for future use.

When the client enters a URL for web information access, the ICAVS determines if this URL has been stored locally during a previous download (i.e. a "cache hit"). Since the ICAVS is continually "crawling" the Web in search of audio/video (and other) content, and caching it, the probability of a cache hit is high. If this is the case, the web content is returned immediately from the ICAVS.

When the requested content is a video, since clients differ in their video viewing capabilities, the ICAVS selects the format appropriate for the client's system (if it has been pre-stored) or generates a copy in this format. This means real-time compression (re-encoding and/or bit rate scaling) will be performed, if necessary, to provide not only the streaming of the video, but also the best possible quality of the video according to the bandwidth available between ICAVS and the client system.

If the web page of the requested URL has not been stored on the ICAVS in a previous download, (i.e. a "cache miss"), the web page is obtained for the user and also stored in the ICAVS for other users' use. For audio or video requests, a real-time audio or video format conversion is performed, if necessary, to generate an audio or video file for streaming according to user's available bandwidth. The audio/video file is stored in the ICAVS for future use in its original form and in the converted new format, i.e. the MCF copy at this time.

In the course of time, as other users request this audio/video, the ICAVS system may determine, based on system statistics on user bandwidth availability, that the MCF copy should be replaced by a copy in a different format.

An embodiment of the invention will now be described with reference to the accompanying drawing, in which:

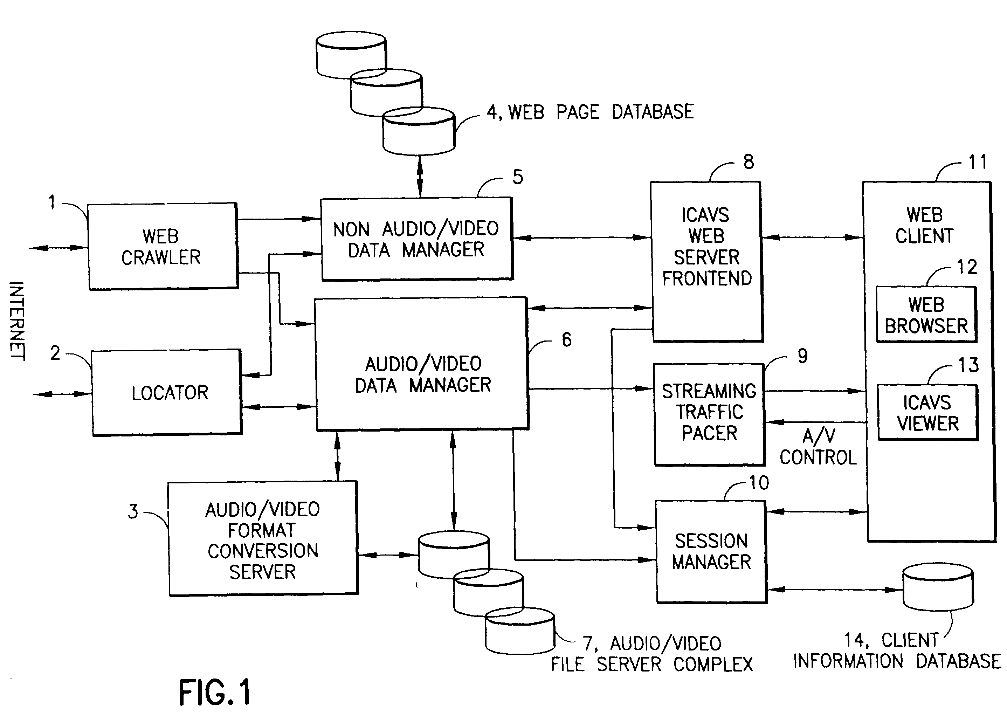

FIG. 1 shows the architecture of the Internet Convolution Audio/Video Server System. This figure also shows the necessary interconnection between the components of ICAVS.

FIG. 2 shows the flow of control from client connection to ICAVS to the delivery of the requested content.

Following is the functional description of each architectural component of ICAVS.

### Audio/Video File Server Complex 7

This component is the repository for all of the audio/video content which is stored in ICAVS. Typically, this would be implemented by an array of disks, include redundancy, and be managed by a file system. The Audio/Video File Server is managed by the Audio/Video Data Manager 6.

### Audio/Video Data Manager 6

As the database manager of the Audio/Video File Server Complex, this component accepts audio or video data URL's from the ICAVS Web Server front-end 8 and consults with the Session Manager 10 to obtain client bandwidth parameters. It then returns information describing the video to be streamed (known as "meta data") to the ICAVS Web server front-end to initialize the client's ICAVS viewer 13. The Audio/Video Data Manager component is a software component, implemented by code which executes on the ICAVS' host processor.

The following situations, handled by the Audio/Video Data Manager, may occur
- There is a cache hit, and the video format of the locally-stored video satisfies the client's bandwidth restriction. The corresponding audio or video file is pulled from the Audio/Video File Server Complex 7 and is passed to the Streaming Traffic Pacer 9 for streaming video delivery.
- There is a cache hit, but the video format does not satisfy the bandwidth restriction. The audio/video file is then fed to the Audio/Video Format Conversion Server 3, and its output is sent to Streaming Traffic Pacer 9 for delivery. This output is simultaneously stored in the Audio/Video File Server Complex for future use.
- There is a cache miss. The Audio/Video Data Manager 6 requests the Locator 2 to obtain the video data from the Internet and feeds its data to the Streaming Traffic Pacer 9 directly for delivery (as well as to the Audio/Video File Server Complex 7 for caching) if the requested audio video file format satisfies the client's bandwidth restriction. If the original audio or video format does not satisfy the bandwidth restriction, the audio/video data is fed to the Audio/Video Format Conversion Server 3 directly for conversion. Again, the output of the converted audio/video data is fed to both the Streaming Traffic Pacer and the Audio/Video File Server Complex. The input to the Audio/Video Format Conversion Server (i.e. the audio or video in its original format) is also stored. Depending on system design, a copy of the video (or audio) streaming format which is most commonly requested can also be produced and stored in the Audio/Video File Server Complex.

### Non-Audio/Video Data Manager 5

On receiving a non-audio/video URL request from the ICAVS Web server 8, this component works as a cache manager for Web pages previously collected in the Web Page Database 4. The Non-Audio/Video Data Manager component is a software component, implemented by code which executes on the ICAVS' host processor.

It is also the database manager of the Web Page Database. In the case of a cache miss, the Non-Audio/Video Data Manager requests the Locator 2 (see below) to obtain the requested Web page from the Internet and returns it to the server front-end. It also keeps a local copy in the Web Page Database 4 for future use.

### Audio/Video Format Conversion Server 3

This is a high-performance audio/video file format conversion server which will most likely be implemented in hardware in order to satisfy real-time requirements. An array of hardware encoders and decoders connected with a switch will implement the conversions. Examples of such hardware encoders are the IBM MPEGSE10-30 MPEG-2 encoder chipset, the C-Cube Microsystems CLM4500 MPEG-1 Video Encoder and CLM4400 MPEG-2 Video Encoder. Software implementation is also possible if timing restrictions are less restrictive.

### Web Client 11

This component is the client system which is comprised of a standard Web browser 12 and an ICAVS plug-in (Preferred ICAVS Viewer 13) for client system characterization and streaming video viewing. Standard web browsers include Microsoft's Windows Explorer and Netscape's Navigator.

Note that the system characterization information which ICAVS determines includes not only communication channels but also CPU type and speed, graphics capabilities, memory buffer size, etc. In order to reduce the load on the ICAVS for real-time services, the Preferred ICAVS Viewer corresponds to the format of the MCF copy of the video, if the client's system can support this.

### ICAVS Web Server 8

The ICAVS Web Server is a software component, implemented by code which executes on the ICAVS' host processor. As a normal Web server using the HTTP protocol, this component should be used as Web proxy server to fully employ its benefit. The Web server on the back-end distinguishes audio/video from non-audio/video URL's and relays client requests for the former URL's to the Audio/Video Data Manager 6 and for the latter URL's to the Non-Audio/Video Data Manager 5 (see below.)

The Web server also invokes a Session Manager 10 to contact the client in order to determine the bandwidth parameters between the server and client system and other client system characteristics.

### Session Manager 10

This component collects bandwidth information from the client system when the ICAVS is first contacted by the client and subsequently, on a periodic basis, if the client is active. This component is a software component, implemented by code which executes on the ICAVS' host processor.

Collected data includes bandwidth between ICAVS and client, client IP address, client processor type, memory buffer size, etc. This information is stored in the Client Information Database 14 which is managed by the Session Manager. The Session Manager provides bandwidth information to the Video Data Manager upon request, for streaming video delivery.

### Web Page Database 4

This component stores non-audio/video Web content which has been downloaded by the Web Crawler 1 or Locator 2 (see below). Typically, this would be implemented by an array of disks (including redundancy), and is managed by a database application which executes on the ICAVS' host processor.

### Client Information Database 14

This component stores client-specific information (such as bandwidth parameters, client system capabilities, client viewer type, etc.) It is accessed by the Session Manager 10 when determining the how to best accommodate a client's request.

Typically, this would be implemented by an array of disks (including redundancy), and would be managed by a database application which executes on the ICAVS' host processor.

### Web Crawler 1

This component continually accesses the Internet to collect Web pages and resources for caching by the ICAVS. The ICAVS Web Crawler component is a software component, implemented by code which executes on the ICAVS' host processor.

Web resources with non-video data are passed to the Non-Audio/Video Data Manager 5 (along with their URL's) for storage in the Web Page Database 4. Video data is passed to Audio/Video Data Manager 6, along with its URL, for further processing and storage in the Audio/Video File Server Complex 7.

An audio/video quality check module may be implemented in the ICAVS to ensure that the video or audio which is cached is of acceptable quality. The checking performed can be similar in function to that which is performed on multimedia files by a player such as ActiveMovie prior to the start of play.

### Locator 2

The Locator accesses the Internet for Web resources (like the Web Crawler 1) but does so at the request of the Non-Audio/Video Data Manager 5, or the Audio/Video Data Manager 6, in real time. This normally happens when a client requests Web resources which are not cached on the ICAVS. The obtained Web data and its corresponding URL are returned to the requesting component.

The ICAVS Locator component is a software component, implemented by code which executes on the ICAVS' host processor.

### Streaming Traffic Pacer 9

As with all streaming audio/video servers, this component paces the speed of audio/video data into the network. It also accepts VCR-like control signals from the client to manipulate streaming audio/video data. It can also adjust to bandwidth changes, if so desired.

The ICAVS Streaming Traffic Pacer is a software component, implemented by code which executes on the ICAVS' host processor.

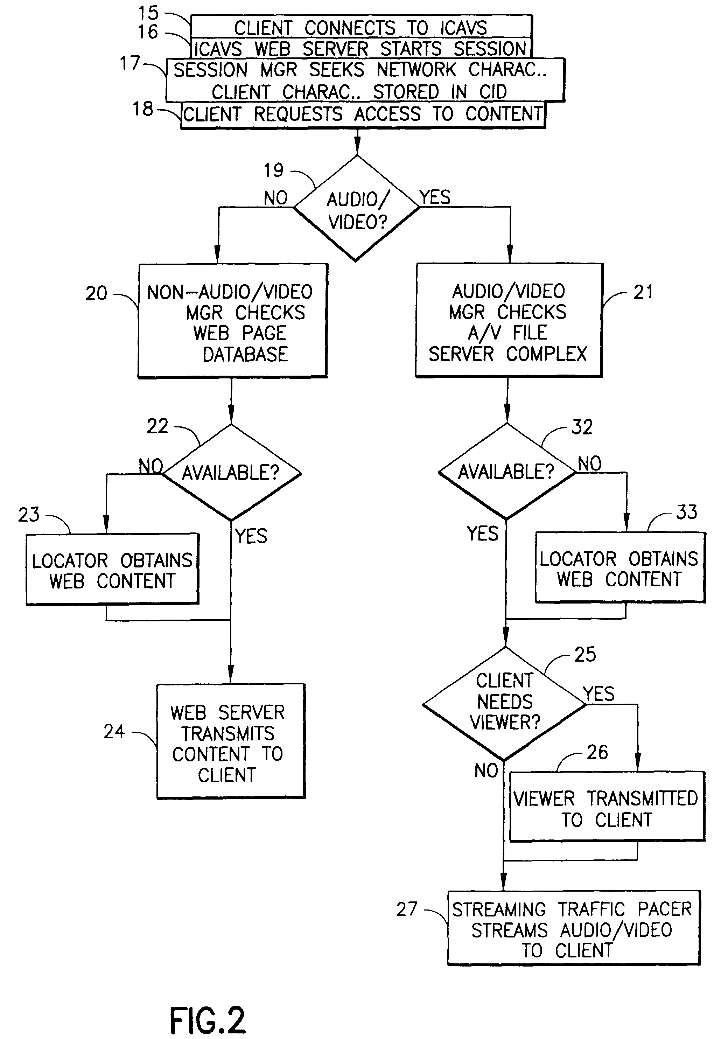

FIG. 2 shows a flowchart of the operation of ICAVS. After a client connects to ICAVS 15, the state of the network between client and server, and, if necessary, determines the client system's capabilities and stores them 17 in the client information database 14.

The client, using an Electronic Program Guide or other means, then requests access to a specific item of audio, video, or other content 18.

If audio or video content has been requested, 19, the Non-Audio/Video Data Manager 5 look for this content 20 in the Web Page Database 4. If it is available there 22, the Web Server 8 Transmits it to the client 24. If not, the Locator 2 obtains it 23. If audio or video content was requested, the Audio/Video Data Manager 6 looks for this content 21 in the Audio/Video File Server Complex 7. If not available 32, the Locator obtains it 33. If needed, a viewer (such as the ICAVS viewer 13) is transmitted to the client 26. The Streaming Traffic Pacer 9 then streams the audio or video to the client 27.

## Claims

1. In a computer system, a method of distributing requested content data in a communications session between a server computer system and a requesting client computer system, said method comprising
a. determining characteristics of said client computer system;
b. determining characteristics of a communication path from said server computer system to said client computer system; and
c. automatically transmitting said content data from said server to said client computer system at a bit rate and in a format compatible with said client computer system and said communications path.

2. A method as recited in claim 1, wherein said characteristics of said communications path are continually determined and said bit rate is dynamically modified to adapt to changing said characteristics of said communications path.

3. A method as recited in claim 1, further comprising
a. maintaining status information as to content data and its format which is most commonly requested by clients; and
b. storing latter said content data in said format in a cache for further distribution.

4. A method as recited in claim 1 wherein said format for transmission of said requested content data is selected from said characteristics of said client system; and said bit rate to be used is selected from said characteristics of said communications path; the method further comprising:
transmitting software to said client computer system which downloads said software to enable it to decode said content data in said selected format.

5. A proxy internet server for delivering content data to a requesting client computer system, said server comprising
a. means for selecting a format for transmission to said client computer system in accordance with characteristics of said client computer system and a communications path to said client computer system;
b. means for selecting a bit rate in accordance with characteristics of said client and said communications path; and
c. means for transmitting said content data in said format and at said bit rate to said client computer system.

6. A proxy internet server as recited in claim 5, further comprising means for transmitting software to said client computer system which downloads said software to enable it to decode said content data transmitted in said selected format.

7. A proxy internet server as recited 5, wherein said means for selecting said format comprises a switch and a array of hardware encoders and decoders connected to said switch.

8. A method as recited in claim 1, wherein said characteristics of said client computer system are determined by downloading a software module by said client computer system which automatically returns it characteristics to said server.

9. A method as recited in claim 1, wherein said video content is stored by said server in a plurality of formats if said video content was previously requested by said client or another client.

10. A method as recited in claim 9, wherein one of said formats is a common format that is likely to be used by a plurality of requesting clients.

11. A method as recited in claim 1, further comprising storing said requested content data at said server for possible future transmission to a requesting client computer system.

12. A method as recited in claim 1, wherein said server searches the internet for said requested content data if latter said requested content is not stored by said server.

13. A method as recited in claim 1, wherein content data is stored in a cache each time there is a client request for latter said content data.
